# EUROPEAN PATENT SPECIFICATION

(11) **EP 3 067 819 B1**
(45) Date of publication and mention of the grant of the patent: **06.06.2018**
(21) Application number: 14860043.0
(22) Date of filing: 20.02.2014
(51) Int. Cl.: G06F 21/71

(54) **LOGIC COMPOUND REGISTER SYSTEM AND METHOD FOR RESISTING ENERGY ANALYSIS ATTACKS**
LOGISCHES VERBINDUNGSREGISTERSYSTEM UND VERFAHREN FÜR BESTÄNDIGKEIT GEGENÜBER ENERGIEANALYSEANGRIFFEN
SYSTÈME DE REGISTRE DE COMPOSÉS LOGIQUES ET PROCÉDÉ DE RÉSISTANCE À DES ATTAQUES D'ANALYSE D'ÉNERGIE

(30) Priority: 07.11.2013 CN 201310551517
(43) Date of publication of application: 14.09.2016
(73) Proprietor: Institute Of Information Engineering Chinese Academy of Sciences, Beijing 100093 (CN)
(72) Inventor: JING, Jiwu, Beijing 100093 (CN); TU, Chenyang, Beijing 100093 (CN); MA, Yuan, Beijing 100093 (CN); LIU, Zongbin, Beijing 100093 (CN); GAO, Neng, Beijing 100093 (CN)
(74) Representative: Awapatent AB
(86) International application number: PCT/CN2014/072282
(87) International publication number: WO 2015/066988

(56) References cited:
- CN-A- 101 150 392
- CN-A- 102 521 544
- CN-A- 103 593 628
- US-A1- 2007 071 235
- US-A1- 2007 076 864
- US-A1- 2007 076 864
- PENGYUAN YU ET AL: "Secure FPGA circuits using controlled placement and routing", HARDWARE/SOFTWARE CODESIGN AND SYSTEM SYNTHESIS, ACM, 2 PENN PLAZA, SUITE 701 NEW YORK NY 10121-0701 USA, 30 September 2007 (2007-09-30), pages 45-50, XP058166438, DOI: 10.1145/1289816.1289831 ISBN: 978-1-59593-824-4
- Kris Tiri ET AL: "Securing Encryption Algorithms against DPA at the Logic Level: Next Generation Smart Card Technology" In: "Network and Parallel Computing", 1 January 2003 (2003-01-01), Springer International Publishing, Cham 032548, XP055376403, ISSN: 0302-9743 ISBN: 978-3-642-38529-2 vol. 2779, pages 125-136, DOI: 10.1007/978-3-540-45238-6_11, * section 3 *
- RAFAEL SOARES ET AL: "Evaluating the robustness of secure triple track logic through prototyping", PROCEEDINGS OF THE TWENTY-FIRST ANNUAL SYMPOSIUM ON INTEGRATED CIRCUITS AND SYSTEM DESIGN, SBCCI '08, 1 January 2008 (2008-01-01), page 193, XP055376401, New York, New York, USA DOI: 10.1145/1404371.1404425 ISBN: 978-1-60558-231-3

## Description

### RELATED APPLICATIONS

This application claims priority to Chinese Patent Application No. 201310551517.5, "Logic Compound Register System and Method for Resisting Power Analysis Attacks" filed on November 7, 2013.

### FIELD OF THE INVENTION

The present disclosure relates to a computer security filed, and more particularly, to a logic compound register system for resisting power analysis attacks.

### BACKGROUND OF THE INVENTION

At present, with development of the science and technology, various chip hardware devices are widely used and have a vast market prospect due to their small size, fast calculation speed, variety of shapes, various e-commerce application scenarios, and long service life, etc.

With widespread use of the chip hardware devices, a Side-Channel security problem for these hardware devices is gradually exposed. Information processed by the chip may be obtained by analyzing chip power consumption, which causes an information leakage accident. In the chip hardware devices, the power consumption of the register changes significantly.

In the information theory, a Hamming Distance (HD) value between two character strings with the same length is the number of different characters of the corresponding character positions, i.e., the number of characters required to replace one character string with another. Hamming Weight (HW) value is the HD value between a character string and an all-zero character string with the same length, i.e., the number of non-zero components in the character string. As for the standard register in the chip hardware device, the HW value of one clock cycle denotes the number of 1 in the character string stored by the register in the clock cycle. The HD value of two adjacent clock cycles denotes the number of different bit values (0 or 1) of the corresponding positions in two bit strings stored by the register in the two clock cycles. According to the power analysis theory, in the working state, if the HW value and the HD value of the standard register are not constant, the power consumption of the standard register may vary. Therefore, the information, which is stored in the standard register or the chip hardware device, may be recovered using power analysis attack technologies.

Therefore, the standard register in the chip hardware device should be protected via following methods, so that the standard register may have the capability of resisting of power analysis attacks.

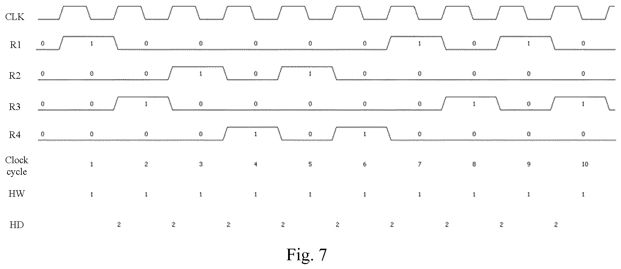

The chip hardware devices are all configured with the specific registers, such as Dual-rail Precharge Logic (DPL)-structure registers, which may resist power analysis attacks. The DPL-structure register consists of four sub-registers, the bit number of which is same as the standard register. When data is input into the DPL-structure register at the beginning of a clock cycle, the input data is stored in the first sub-register, the input data is inverted and input into the second sub-register. When the next clock cycle begins, the data in the first sub-register is input into the third sub-register, the data in the second sub-register is input into the fourth sub-register, and the first and second sub-registers are configured as zero. As shown in figure 7, when a sequence "1, 0, 0, 1, 1" is allocated to the DPL-structure register, two clock cycles are required to output one value in the sequence. That is, ten clock cycles are required to output the five values in the sequence. The throughput of the chip hardware device using the DPL-structure register is half of that using the standard register.

### SUMMARY

An embodiment of the present disclosure may provide a logic compound register system, which may have the capability of resisting power analysis attacks on the premise of not reducing the throughput of the chip hardware device. This register system may conveniently replace the existing standard register, and may enhance the security the register or even the chip hardware device.

In order to achieve the above objective, an embodiment of the present disclosure may provide a logic compound register system, which includes: a work register, a weight complementary register, a distance complementary register and a dual-complementary register.

An input of the work register is an input of the logic compound register system, and an output of the work register is an output of the logic compound register system;
the weight complementary register is to compensate a Hamming Weight (HW) value of the work register;
the distance complementary register is to compensate a Hamming Distance (HD) value of the work register; and
the dual-complementary register is to compensate the HD value of the weight complementary register, and compensate the HW value of the distance complementary register.

Further, the clock signal input ports of the work register, weight complementary register, distance complementary register, and dual-complementary register connect to an external clock signal input port; and
reset signal input ports of the work register, weight complementary register, distance complementary register and dual-complementary register connect to an external reset signal input port.

Further, an input port of the work register connects to an input port of the logic compound register system, and an output port of the work register connects to an output port of the logic compound register system;
an input port of the weight complementary register connects to the input port of the logic compound register system via a first NOT gate;
an output port of the distance complementary register, the output port of the work register, and the input port of the logic compound register system connect to input ports of a first XOR gate;
an output port of the first XOR gate connects to an input port of the distance complementary register via a second NOT gate; and
an input port of the dual-complementary register connects to the output port of the first XOR gate.

Further, the system further includes: a high signal level input port and a low signal level input port.

An input port of the logic compound register system and the low signal level input port respectively connect to input ports of a second XOR gate, an output port of the second XOR gate connects to an input port of the work register, and an output port of the work register connects to an input port of a first OR gate via a first delay gate;
the input port of the logic compound register system and the high signal level input port respectively connect to input ports of a third XOR gate, an output port of the third XOR gate connects to an input port of the weight complementary register, and an output port of the weight complementary register connects to an input port of the first OR gate via a third NOT gate;
the output port of the work register, the input port of the logic compound register system and an output port of the dual-complementary register respectively connect to input ports of a fourth XOR gate, an output port of the fourth XOR gate connects to an input port of the distance complementary register, and an output port of the distance complementary register connects to an input port of a second OR gate via a second delay gate;
the output port of the distance complementary register, the input port of the logic compound register system and the output port of the work register respectively connect to input ports of a fifth XOR gate, and the output port of the dual-complementary register connects to an input of the second OR gate via a third delay gate; and
an output port of the first OR gate and an output port of the second OR gate respectively connect to input ports of an AND gate, and an output port of the AND gate connects to an output port of the logic compound register system.

Further, delay of the second XOR gate, delay of the third XOR gate, delay of the fourth XOR gate, delay of the fifth XOR gate is same, and delay of the first delay gate, delay of the second delay gate, delay of the third delay gate, and delay of the third NOT gate is same.

With the logic compound register system and the method for resisting power analysis attacks provided by embodiments of the present disclosure, the weight complementary register may be to compensate a Hamming Weight (HW) value of the work register. The distance complementary register may be to compensate a Hamming Distance (HD) value of the work register. The dual-complementary register may be to compensate the HD value of the weight complementary register, and compensate the HW value of the distance complementary register. Therefore, the throughput of the whole chip hardware device may be improved without changing the sequence of the whole logic compound register system or even the chip hardware device.

### BRIEF DESCRIPTION OF THE DRAWINGS

Figure 1 is a schematic diagram illustrating a logic compound register system in accordance with various embodiments of the present disclosure;
Figure 2 is a diagram illustrating change of a HW value and a HD value of a work register in five consecutive clock cycles in accordance with various embodiments of the present disclosure;
Figure 3 shows a sequence diagram of a work register and a weight complementary register in the logic compound register system in accordance with various embodiments of the present disclosure;
Figure 4 shows a sequence diagram of a work register and a distance complementary register in the logic compound register system in accordance with various embodiments of the present disclosure;
Figure 5 shows a sequence diagram of each register in the logic compound register system in accordance with various embodiments of the present disclosure;
Figure 6 is a schematic diagram illustrating a logic compound register system in accordance with various embodiments of the present disclosure;
Figure 7 is a sequence diagram of a Dual-rail Precharge Logic (DPL)-structure register in accordance with various embodiments of the present disclosure.

### DETAILED DESCRIPTION

The present disclosure is further described in detail hereinafter with reference to the accompanying drawings to make the objective, technical solution and merits thereof more apparent.

An embodiment of the present disclosure may provide a logic compound register system. The logic compound register system may include: a work register, a weight complementary register, a distance complementary register and a dual-complementary register.

An input of the work register may be an input of the logic compound register system, and an output of the work register is an output of the logic compound register system.

The weight complementary register may be to perform Hamming Weight (HW) compensation for the work register.

The distance complementary register may be to perform Hamming Distance (HD) compensation for the work register.

The dual-complementary register may be to perform the HD compensation for the weight complementary register, and perform the HW compensation for the distance complementary register.

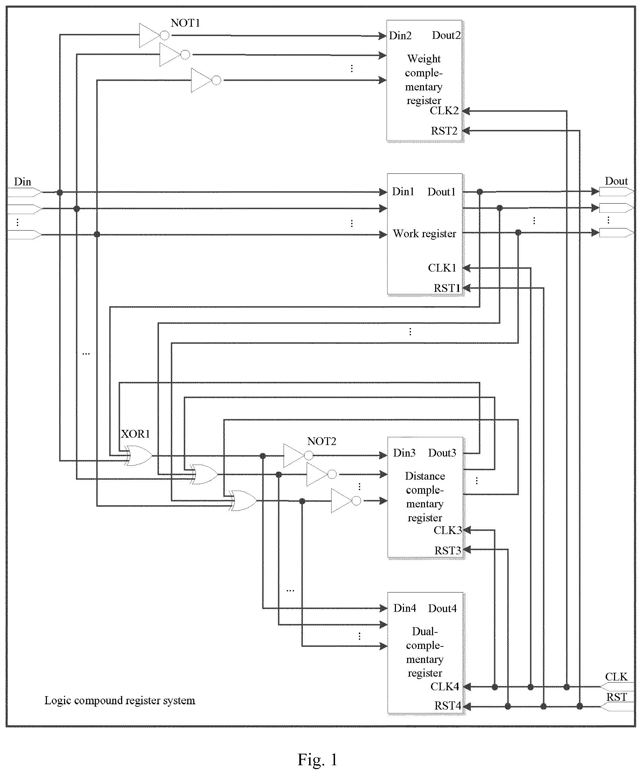

As an embodiment of the present disclosure, as shown in figure 1, a clock signal input port of the work register, i.e., CLK1, a clock signal input port of the weight complementary register, i.e., CLK2, a clock signal input port of the distance complementary register, i.e., CLK3 and a clock signal input port of the dual-complementary register, i.e., CLK4 may connect to an external clock signal input port, i.e., CLK.

A reset signal input port of the work register, i.e., RST1, a reset signal input port of the weight complementary register, i.e., RST2, a reset signal input port of the distance complementary register, i.e., RST3, and a reset signal input port of the dual-complementary register, i.e., RST4 may connect to an external reset signal input port, i.e., RST.

An input port i.e., Din1 of the work register, may connect to an input port, i.e., Din of the logic compound register system. An output port, i.e., Dout1 of the work register may connect to an output port, i.e., Dout of the logic compound register system.

An input port, i.e., Din2 of the weight complementary register may connect to the Din via a first NOT gate, i.e., NOT1.

An output port, i.e., Dout3 of the distance complementary register an output port, i.e., Dout1 of the work register, and an input port, i.e., Din of the logic compound register system may respectively connect to input ports of a first XOR gate, i.e., XOR1. An output port of the XOR1 may connect to an input port, i.e., Din3 of the distance complementary register via a second NOT gate, i.e., NOT2.

An input port, i.e., Din4 of the dual-complementary register may connect to an output port of the XOR1.

Taking a one-bit register for example, suppose that the reset signal is active high. All registers may be double-edge-triggered registers. According to figures 1, 2 to 5, the work process of the logic compound register system in the above examples may be described in detail hereinafter.

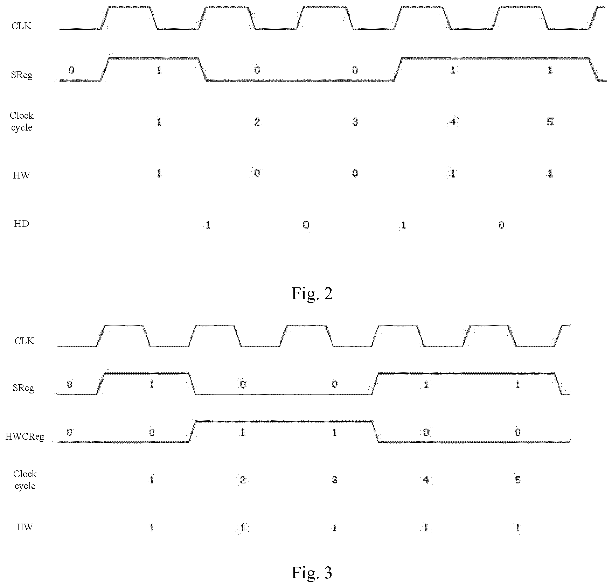

Referring to figures 2 to 5, figures 2 to 5 may show a sequence diagram generated by the control unit for each register in five clock cycles.

The clock signal input ports of the work register, weight complementary register, distance complementary register, and dual-complementary register may connect to the external clock signal input port. The reset signal input ports of the work register, weight complementary register, distance complementary register, and dual-complementary register may connect to the external reset signal input port. Therefore, the sequences of the four standard registers in a reset mode and work mode may be the same as those of the logic compound register system. That is, when the RST is a high level, the four standard registers may be in the reset mode. When an RST pin is a low level, the four standard registers may be in the work mode.

Therefore, the state of the four standard registers may meet the definition of the CLK pin and RST pin of the logic compound register system.

Figure 2 is a diagram illustrating change of the HW value and the HD value of the work register, i.e., SReg in five consecutive clock cycles, i.e., clock cycles 1 to 5 when the chip hardware device is in the work state. The initial state of all the registers may be configured as zero. As shown in figure 2, a sequence "1, 0, 0, 1, 1" may be allocated to the work register in the clock cycles 1 to 5. As shown in figure 2, the HW value and the HD value corresponding to each clock cycle of the SReg may be not constant. According to the power analysis theory, in the work state, if the HW value and the HD value of the standard register are not constant, the information stored in the standard registers or even the chip hardware device may be recovered using the power analysis attack technology.

Figure 3 is a sequence diagram of the work register and weight complementary register implemented using the logic compound register method in accordance with various embodiments of the present disclosure. Suppose that the sequence "1, 0, 0, 1, 1" may be allocated to the SReg in clock cycles 1 to 5. It can be found from figure 1 that in each clock cycle, the current value of the weight complementary register, i.e., HWCReg and the current value of the work register may be complementary. Therefore, the sequence "0, 1, 1, 0, 0" may be allocated to the complementary register in the clock cycles 1 to 5. Since the value of the HWCReg may be determined by the value of the SReg, the sum of the HW value of the SReg and the HW value of the HWCReg should be taken into consideration. As shown in figure 3, in each clock cycle of the work state, the sum of the HW value may always be one. Therefore, the HW value may be kept constant. That is, the HW compensation may be performed for the SReg.

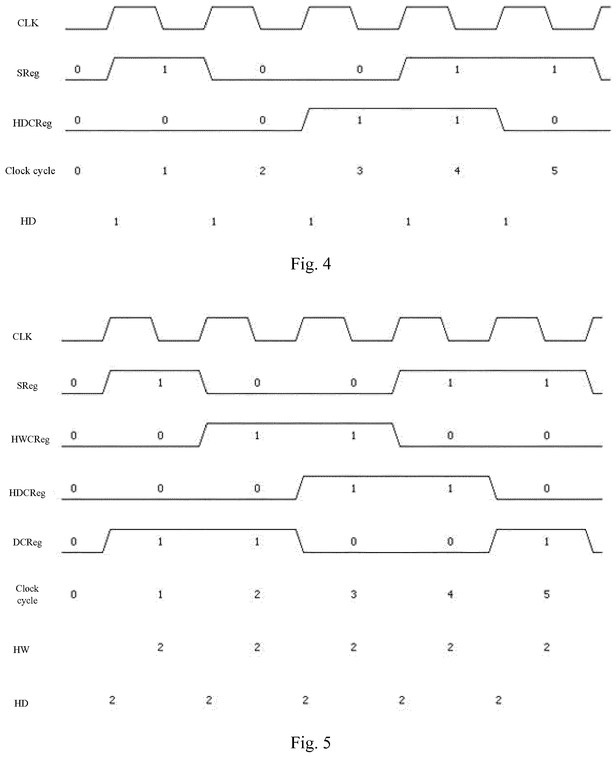

Figure 4 is a sequence diagram of the SReg and the distance complementary register, i.e., HDCReg in the logic compound register system in accordance with various embodiments of the present disclosure. Suppose that the sequence "1, 0, 0, 1, 1" may be allocated to the SReg in clock cycles 1 to 5. It can be found from figure 1 that the current value of the HDCReg may be determined by the current value of the SReg, the value of the SReg in the previous clock cycle, and the value of the HDCReg in the previous clock cycle. The XOR operation may be performed for the above three values, i.e., the current value of the SReg, the value of the SReg in the previous clock cycle, and the value of the HDCReg in the previous clock cycle and the XOR result of the above three values may be inverted to obtain the current value of the HDCReg. It can be seen from the calculation method of the current value of the HDCReg that in order to obtain the current value of the HDCReg, the reset value before the work mode should also be considered. Based on the above factors, it may be computed that the sequence "0, 1, 1, 0, 0" may be allocated to the HDCReg in the clock cycles 1 to 5. Since the value of the HDCReg is determined by the value of the SReg, and the value of the HDCReg, the sum of HD value of the SReg and the HD value of the HDCReg should be taken into consideration. As shown in figure 4, each time the values stored in the SReg and HDCReg are updated in the work state, the sum of the HD values may always be one. Therefore, the HD value may be kept constant. That is, the HD value of the SReg may be compensated.

Similarly, the HD value of the weight complementary register, i.e., HWCReg may also need to be compensated. The HW value of the HDCReg may also need to be compensated. The function for compensating the HD value of the HWCReg and the HW value of the HDCReg may be implemented by the dual-complementary register, i.e., DCReg. It can be seen from figure 1 that the input value of the HDCReg and input value of the DCReg may be complementary, which is similar to the SReg and HWCReg. It may be easily obtained by calculation that the sum of the HW value of the HDCReg and the HW value of the DCReg may always be one. Similarly, since the input value of the SReg and the input value of the HWCReg may be complementary, the input value of the HDCReg and the input value of the DCReg may be complementary, and the HDCReg may compensate the HD value of the SReg, it can be derived that the DCReg may compensate the HD value of the HWCReg. Since the values of the HWCReg, the HDCReg, and the DCReg may be determined by the SReg, the HW value and the HD value, which may be taken into consideration, should be the sum of the four registers. As shown in figure 5, data stored in the logic compound register system may change once each clock cycle. Since the sum of the HW values in each clock cycle may always be one, and the sum of the HD values may always be 2 each time the stored data changes. Therefore, the logic compound register system may have the capability of resisting power analysis attacks.

The above embodiments may take the one-bit register for example. In practice, the multi-bit register may be obtained by combining multiple one-bit registers. The logic compound register system also may adopt the multi-bit registers.

Further, in a digital circuit, fan-out of a logic gate may be defined as the number of logic gates, which may be fed back by the logic gate or connected to the logic gate. During the working process of the register, the fan-out of the register may affect the power consumption of the register. Therefore, in order to prevent power analysis attack for the register, embodiments of the present disclosure may try to ensure that the value allocated to the fan-out of each register in the register system should be identical.

In the logic compound register system provided by the above embodiments of the present disclosure, since both the HWCReg and DCReg do not have the output, the fan-out of the HWCReg and DCReg may be different from that of the SReg and the HDCReg. In view of this, based on the above embodiments of the present disclosure, following embodiments may be provided.

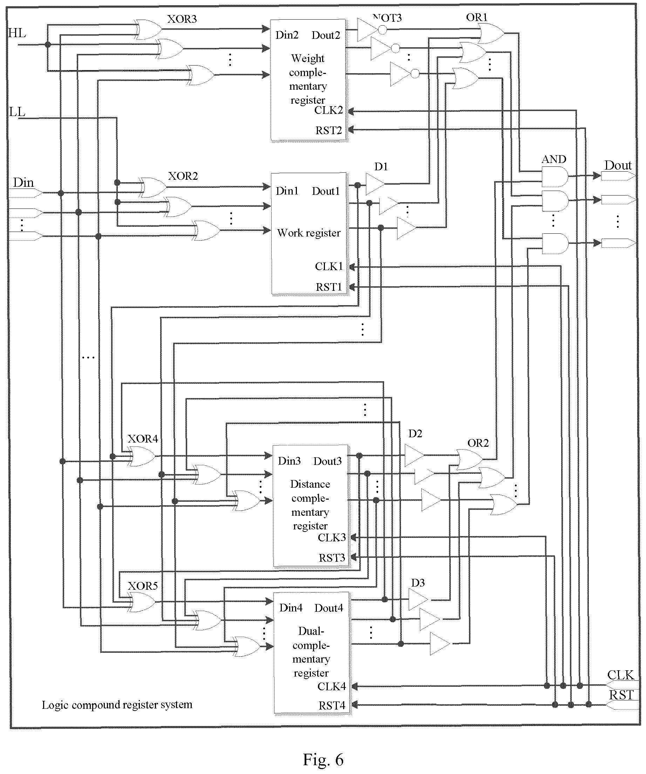

As shown in figure 6, the logic compound register system provided by embodiment two of the present disclosure may include: a work register, a weight complementary register, a distance complementary register and a dual-complementary register. The connection mode between the external clock signal input port, i.e., the CLK, and the external reset signal input port, i.e., RST, and the above four registers may be the same as that in embodiment one, without limitation here.

The logic compound register system may further include: a high signal level input port and a low signal level input port.

An input port, i.e., Din of the logic compound register system and the low signal level input port may respectively connect to input ports of a second XOR gate, i.e., XOR2, an output port of the second XOR gate, i.e., XOR2 may connect to an input port, i.e., Din1 of the work register, and an output port, i.e., Dout1 of the work register may connect to an input port of a first OR gate, i.e., OR1 via a first delay gate, i.e., D1.

The input port, i.e., Din of the logic compound register system and the high signal level input port may respectively connect to input ports of a third XOR gate, i.e., XOR3, an output port of the third XOR gate, i.e., XOR3 may connect to an input port, i.e., Din2 of the weight complementary register, and an output port, i.e., Dout2 of the weight complementary register may connect to an input port of the first OR gate, i.e., OR1 via a third NOT gate, i.e., NOT3.

The output port, i.e., Dout1 of the work register, the input port, i.e., Din of the logic compound register system and an output port, i.e., Dout4 of the dual-complementary register may respectively connect to input ports of a fourth XOR gate, i.e., XOR4, an output port of the fourth XOR gate, i.e., the XOR4 may connect to an input port, i.e., Din3 of the distance complementary register, and an output port, i.e., Dout3 of the distance complementary register may connect to an input port of a second OR gate, i.e., OR2 via a second delay gate, i.e., D2.

The output port, i.e., Dout3 of the distance complementary register, the input port, i.e., Din of the logic compound register system and the output port, i.e., Dout1 of the work register may respectively connect to input ports of a fifth XOR gate, i.e., XOR5, and the output port, i.e., Dout4 of the dual-complementary register may connect to an input of the second OR gate, i.e., OR2 via a third delay gate, i.e., D3.

An output port of the first OR gate, i.e., OR1 and an output port of the second OR gate, i.e., OR2 may respectively connect to input ports of an AND gate, and an output port of the AND gate may connect to an output port, i.e., Dout of the logic compound register system.

By comparing the embodiment one and the embodiment two via observing the figure 1 and the figure 6, although the structure of the circuits in the two figures are different, the HW value and HD value in the sequence and each clock cycle may be the same. If an example that the sequence "1, 0, 0, 1, 1" may be allocated to the work register in clock cycles 1 to 5 is given, the sequence diagram, HW value and HD value of the each register in the embodiment two may still be shown in figure 5. Besides the equivalent circuit, the difference between the figure 1 and the figure 6 may further include the output of the weight complementary register and the output of the dual-complementary register. Therefore, it may be ensured that the fan-out of the four registers may be the same. Further, four XOR gates (XOR2 to XOR5) may be respectively set in front of the four registers to reduce delay difference of the input port of the logic compound register system. Further, D1, D2, D3 and NOT3 with the same delay, and the OR1 and OR2 with the same delay may be set behind the output ports of the four registers to reduce delay difference of the output port of the logic compound register system.

Based on the above logic compound register system and the value of the each register in each clock cycle, embodiments of the present disclosure may further provide a method for resisting power analysis attacks, which may include:
when an external reset signal is valid, making a work register, a weight complementary register, a distance complementary register and a dual-complementary register reset;
when the external reset signal is invalid, setting a current value of the weight complementary register to be complementary with a current value of the work register in each clock cycle;
when the external reset signal is invalid, setting a current value of the distance complementary register to be a value obtained by reverting an XOR value, which is obtained by XORing the current value of the work register, a value of the work register of a previous clock cycle, and a value of the distance complementary register of a previous clock cycle; and
when the external reset signal is invalid, setting a current value of the dual-complementary register to be complementary with the current value of the distance complementary register in each clock cycle.

Therefore, with the technical solution provided by embodiments of the present disclosure, standard registers may be replaced with logic compound register system. The original standard registers may be compensated with multiple standard registers to ensure the security of the data stored in the logic compound register system in the work mode of the chip hardware device, resist power attacks on the register, and maintain the throughput of the original standard registers or even the whole chip hardware device. Further, embodiments of the present disclosure may be convenient for implementation and popularized use. Further, components used by the logic compound register system in embodiments of the present disclosure may meet the requirements of a standard circuit component database, may be normally coupled to the chip hardware device, and may have good compatibility.

What has been described and illustrated herein may be examples of the disclosure along with some variations. The terms, descriptions and figures used herein may be set forth by way of illustration only and may not be meant as limitations. Many variations may be possible within the scope of the disclosure, which may be intended to be defined by the following claims -- and their equivalents -- in which all terms may be meant in their broadest reasonable sense unless otherwise indicated.

## Claims

1. A logic compound register system, comprising: a work register, a weight complementary register, a distance complementary register and a dual-complementary register;
wherein an input of the work register is an input of the logic compound register system, and an output of the work register is an output of the logic compound register system;
the weight complementary register is to compensate a Hamming Weight (HW) value of the work register;
the distance complementary register is to compensate a Hamming Distance (HD) value of the work register; and
the dual-complementary register is to compensate the HD value of the weight complementary register, and compensate the HW value of the distance complementary register.

2. The system according to claim 1, wherein clock signal input ports of the work register, weight complementary register, distance complementary register, and dual-complementary register connect to an external clock signal input port; and
reset signal input ports of the work register, weight complementary register, distance complementary register and dual-complementary register connect to an external reset signal input port.

3. The system according to claim 2, wherein an input port of the work register connects to an input port of the logic compound register system, and an output port of the work register connects to an output port of the logic compound register system;
an input port of the weight complementary register connects to the input port of the logic compound register system via a first NOT gate;
an output port of the distance complementary register, the output port of the work register, and the input port of the logic compound register system connect to input ports of a first XOR gate;
an output port of the first XOR gate connects to an input port of the distance complementary register via a second NOT gate; and
an input port of the dual-complementary register connects to the output port of the first XOR gate.

4. The system according to claim 2, further comprising: a high signal level input port and a low signal level input port;
an input port of the logic compound register system and the low signal level input port respectively connect to input ports of a second XOR gate, an output port of the second XOR gate connects to an input port of the work register, and an output port of the work register connects to an input port of a first OR gate via a first delay gate;
the input port of the logic compound register system and the high signal level input port respectively connect to input ports of a third XOR gate, an output port of the third XOR gate connects to an input port of the weight complementary register, and an output port of the weight complementary register connects to an input port of the first OR gate via a third NOT gate;
the output port of the work register, the input port of the logic compound register system and an output port of the dual-complementary register respectively connect to input ports of a fourth XOR gate, an output port of the fourth XOR gate connects to an input port of the distance complementary register, and an output port of the distance complementary register connects to an input port of a second OR gate via a second delay gate;
the output port of the distance complementary register, the input port of the logic compound register system and the output port of the work register respectively connect to input ports of a fifth XOR gate, and the output port of the dual-complementary register connects to an input of the second OR gate via a third delay gate; and
an output port of the first OR gate and an output port of the second OR gate respectively connect to input ports of an AND gate, and an output port of the AND gate connects to an output port of the logic compound register system.

5. The system according to claim 4, delay of the second XOR gate, delay of the third XOR gate, delay of the fourth XOR gate, delay of the fifth XOR5 gate is same, and delay of the first delay gate, delay of the second delay gate, delay of the third delay gate, and delay of the third NOT gate is same.

## Patentansprüche

1. Ein logisches Verbindungsregistersystem, das Folgendes aufweist: ein Arbeitsregister, ein Gewichtskomplementärregister, ein Abstandskomplementärregister und ein Dualkomplementärregister,
wobei ein Eingang des Arbeitsregisters ein Eingang des logischen Verbindungsregistersystems ist, und ein Ausgang des Arbeitsregisters ein Ausgang des logischen Verbindungsregistersystems ist;
das Gewichtskomplementärregister einen Wert des Hamming-Gewichts (HW) des Arbeitsregisters kompensieren muss;
das Abstandskomplementärregister einen Wert des Hamming-Abstands (HD) des Arbeitsregisters kompensieren muss;
das Dualkomplementärregister den HD-Wert des Gewichtskomplementärregisters kompensieren muss, sowie den HW-Wert des Abstandskomplementärregisters kompensieren muss.

2. System gemäß Anspruch 1, wobei Taktsignal-Eingangsanschlüsse des Arbeitsregisters, des Gewichtskomplementärregisters, des Abstandskomplementärregisters und des Dualkomplementärregisters mit einem externen Taktsignal-Eingangsanschluss verbunden sind; und
Rücksetzsignal-Eingangsanschlüsse des Arbeitsregisters, des Gewichtskomplementärregisters, des Abstandskomplementärregisters und des Dualkomplementärregisters mit einem externen Rücksetzsignal-Eingangsanschluss verbunden sind.

3. System gemäß Anspruch 2, wobei ein Eingangsanschluss des Arbeitsregisters mit einem Eingangsanschluss des logischen Verbindungsregistersystems verbunden ist, und ein Ausgangsanschluss des Arbeitsregisters mit einem Ausgangsanschluss des logischen Verbindungsregistersystems verbunden ist;
ein Eingangsanschluss des Gewichtskomplementärregisters mit dem Eingangsanschluss des logischen Verbindungsregistersystems über ein erstes NICHT-Gatter verbunden ist;
ein Ausgangsanschluss des Abstandskomplementärregisters, der Ausgangsanschluss des Arbeitsregisters und der Eingangsanschluss des logischen Verbindungsregistersystems mit Eingangsanschlüssen eines ersten XOR-Gatters verbunden sind;
ein Ausgangsanschluss des ersten XOR-Gatters mit einem Eingangsanschluss des Abstandskomplementärregisters über ein zweites NICHT-Gatter verbunden ist; und
ein Eingangsanschluss des Dualkomplementärregisters mit dem Ausgangsanschluss des ersten XOR-Gatters verbunden ist.

4. System gemäß Anspruch 2, das darüber hinaus Folgendes aufweist: einen Signalhochpegel-Eingangsanschluss und einen Signaltiefpegel-Eingangsanschluss ;
wobei ein Eingangsanschluss des logischen Verbindungsregistersystems und der Signaltiefpegel-Eingangsanschluss mit Eingangsanschlüssen eines zweiten XOR-Gatters verbunden sind, ein Ausgangsanschluss des zweiten XOR-Gatters mit einem Eingangsanschluss des Arbeitsregisters verbunden ist, und ein Ausgangsanschluss des Arbeitsregisters mit einem Eingangsanschluss eines ersten ODER-Gatters über ein erstes Verzögerungsgatter verbunden ist;
der Eingangsanschluss des logischen Verbindungsregistersystems bzw. der Signalhochpegel-Eingangsanschluss mit Eingangsanschlüssen eines dritten XOR-Gatters verbunden ist, ein Ausgangsanschluss des dritten XOR-Gatters mit einem Eingangsanschluss des Gewichtskomplementärregisters verbunden ist, und ein Ausgangsanschluss des Gewichtskomplementärregisters mit einem Eingangsanschluss des ersten ODER-Gatters über ein drittes NICHT-Gatter verbunden ist;
der Ausgangsanschluss des Arbeitsregisters, der Eingangsanschluss des logischen Verbindungsregistersystems und ein Ausgangsanschluss des Dualkomplementärregisters mit Eingangsanschlüssen eines vierten XOR-Gatters verbunden sind, ein Ausgangsanschluss des vierten XOR-Gatters mit einem Eingangsanschluss des Abstandskomplementärregisters verbunden ist, und ein Ausgangsanschluss des Abstandskomplementärregisters mit einem Eingangsanschluss eines zweiten ODER-Gatters über ein zweites Verzögerungsgatter verbunden ist;
der Ausgangsanschluss des Abstandskomplementärregisters, der Eingangsanschluss des logischen Verbindungsregistersystems und der Ausgangsanschluss des Arbeitsregisters mit Eingangsanschlüssen eines fünften XOR-Gatters verbunden sind, und der Ausgangsanschluss des Dualkomplementärregisters mit einem Eingang des zweiten ODER-Gatters über ein drittes Verzögerungsgatter verbunden ist; und
ein Ausgangsanschluss des ersten ODER-Gatters und ein Ausgangsanschluss des zweiten ODER-Gatters mit Eingangsanschlüssen eines UND-Gatters verbunden sind, und ein Ausgangsanschluss des UND-Gatters mit einem Ausgangsanschluss des logischen Verbindungsregistersystems verbunden ist.

5. System gemäß Anspruch 4, wobei die Verzögerung des zweiten XOR-Gatters, die Verzögerung des dritten XOR-Gatters, die Verzögerung des vierten XOR-Gatters, die Verzögerung des fünften XOR-Gatters gleich ist, und die Verzögerung des ersten Verzögerungsgatters, die Verzögerung des zweiten Verzögerungsgatters, die Verzögerung des dritten Verzögerungsgatters und die Verzögerung des dritten NICHT-Gatters gleich ist.

## Revendications

1. Système de registres de composé logique, comprenant :
un registre de travail, un registre complémentaire de poids, un registre complémentaire de distance et un registre complémentaire double ; dans lequel :
une entrée du registre de travail est une entrée du système de registres de composé logique, et une sortie du registre de travail est une sortie du système de registres de composé logique ;
le registre complémentaire de poids a pour objet de compenser une valeur de poids de Hamming (HW) du registre de travail ;
le registre complémentaire de distance a pour objet de compenser une valeur de distance de Hamming (HD) du registre de travail ; et
le registre complémentaire double a pour objet de compenser la valeur HD du registre complémentaire de poids et de compenser la valeur HW du registre complémentaire de distance.

2. Système selon la revendication 1, dans lequel :
des ports d'entrée de signal d'horloge du registre de travail, du registre complémentaire de poids, du registre complémentaire de distance et du registre complémentaire double sont connectés à un port d'entrée de signal d'horloge externe ; et
des ports d'entrée de signal de réinitialisation du registre de travail, du registre complémentaire de poids, du registre complémentaire de distance et du registre complémentaire double sont connectés à un port d'entrée de signal de réinitialisation externe.

3. Système selon la revendication 2, dans lequel :
un port d'entrée du registre de travail est connecté à un port d'entrée du système de registres de composé logique et un port de sortie du registre de travail est connecté à un port de sortie du système de registres de composé logique ;
un port d'entrée du registre complémentaire de poids est connecté au port d'entrée du système de registres de composé logique via une première porte NON ;
un port de sortie du registre complémentaire de distance, le port de sortie du registre de travail et le port d'entrée du système de registres de composé logique sont connectés à des ports d'entrée d'une première porte OU-Exclusif ;
un port de sortie de la première porte OU-Exclusif est connecté à un port d'entrée du registre complémentaire de distance via une deuxième porte NON ; et
un port d'entrée du registre complémentaire double est connecté au port de sortie de la première porte OU-Exclusif.

4. Système selon la revendication 2, comprenant en outre :
un port d'entrée de niveau de signal haut et un port d'entrée de niveau de signal bas ;
un port d'entrée du système de registres de composé logique et le port d'entrée de niveau de signal bas sont respectivement connectés à des ports d'entrée d'une deuxième porte OU-Exclusif, un port de sortie de la deuxième porte OU-Exclusif est connecté à un port d'entrée du registre de travail et un port de sortie du registre de travail est connecté à un port d'entrée d'une première porte OU via une première porte de retard ;
le port d'entrée du système de registres de composé logique et le port d'entrée de niveau de signal haut sont respectivement connectés à des ports d'entrée d'une troisième porte OU-Exclusif, un port de sortie de la troisième porte OU-Exclusif est connecté à un port d'entrée du registre complémentaire de poids et un port de sortie du registre complémentaire de poids est connecté à un port d'entrée de la première porte OU via une troisième porte NON ;
le port de sortie du registre de travail, le port d'entrée du système de registres de composé logique et un port de sortie du registre complémentaire double sont respectivement connectés à des ports d'entrée d'une quatrième porte OU-Exclusif, un port de sortie de la quatrième porte OU-Exclusif est connecté à un port d'entrée du registre complémentaire de distance et un port de sortie du registre complémentaire de distance est connecté à un port d'entrée d'une deuxième porte OU via une deuxième porte de retard ;
le port de sortie du registre complémentaire de distance, le port d'entrée du système de registres de composé logique et le port de sortie du registre de travail sont respectivement connectés à des ports d'entrée d'une cinquième porte OU-Exclusif, et le port de sortie du registre complémentaire double est connecté à un port d'entrée de la deuxième porte OU via une troisième porte de retard ; et
un port de sortie de la première porte OU et un port de sortie de la deuxième porte OU sont respectivement connectés à des ports d'entrée d'une porte ET, et un port de sortie de la porte ET est connecté à un port de sortie du système de registres de composé logique.

5. Système selon la revendication 4, un retard de la deuxième porte OU-Exclusif, un retard de la troisième porte OU-Exclusif, un retard de la quatrième porte OU-Exclusif et un retard de la cinquième porte OU-Exclusif sont les mêmes, et un retard de la première porte de retard, un retard de la deuxième porte de retard, un retard de la troisième porte de retard et un retard de la troisième porte NON sont les mêmes.
